# EUROPEAN PATENT APPLICATION

(11) **EP 4 431 873 A1**
(43) Date of publication of application: **18.09.2024**
(21) Application number: 23161566.7
(22) Date of filing: 13.03.2023
(51) Int. Cl.: G01C 21/16, E02F 3/84, E02F 9/20, E02F 9/26

(54) **SENSOR CHAIN FUSION ALGORITHM**

(71) Applicant: Leica Geosystems Technology A/S, 5220 Odense SØ (DK)
(72) Inventor: KEAN, Michael Goulet, 5220 Odense C (DK)
(74) Representative: Kaminski Harmann

(57) **Abstract**

The invention relates to a computer program product for deriving a heading (512) of an implement (2) of a work vehicle (1). The work vehicle (1) comprises, as independently tracked components, the implement (2), a chassis (4) and an arm (3) connecting the two. For each of the independently tracked components, a respective IMU (52-57) is correspondingly associated, wherein the IMU provides an IMU reference frame of the component representing a measured pose of said component. The computer program product derives, on the basis of the IMU reference frames, internal and external constraints consistent component reference frames. The heading (512) of the implement is derived utilizing the consistent component reference frames.

## Description

### FIELD OF THE INVENTION

The present invention relates to a computer program product for deriving a heading of an implement of a work vehicle. The work vehicle comprises a set independently tracked components. The set of independently tracked components comprises the implement, a chassis and an arm connecting the implement to the chassis. An inertial measurement unit (IMU) is correspondingly associated to each of the independently tracked components and provide respective six degree of freedom IMU data regarding the pose of the said component. The invention further relates to a controller of the work vehicle and the work vehicle equipped with the said controller.

### BACKGROUND OF THE INVENTION

Contemporary work vehicles are high value assets, thus there are strong economic incentives to utilize them as efficiently as possible. Providing accurate attitude, respectively pose, determination of the implements of the work vehicle enables the execution of the task of the work vehicle, e.g. a soil levelling, in a shorter timeframe with less intermediate steps. Such a way of working is not only advantageous from a financial point of view, but also leads to a lower environmental impact and less workload for the machine operator.

Work vehicle in the sense of the present invention might be foreseen as construction vehicle or a similar vehicle e.g. a crawler, a motor grader, a snow groomer, a tractor or forestry vehicle with a loading implement, etc. Implement might be foreseen as the respective tools, e.g. earth-moving blades and bucket, snow plows and blowers, grapples, etc. It is clear for the skilled person that the above lists are non-exclusive. For brevity and transparency reasons from here on only crawler type vehicles equipped with a blade are discussed in details. The specific features of other work vehicles might be applied accordingly.

There is a wide variety of kinematic systems to track implement motion on work vehicles. Many systems rely on the use of inertial measurement units (IMU-s) associated with different parts of the work vehicle. Contemporary IMU-s comprise a three axis gyroscope for orientation determination and a three axis accelerometer to determine (linear) accelerations. Further kinematic parameters are typically determined by integration of the data from the gyroscopes and accelerometers. IMU-s might also be equipped with a processing unit configured to provide further data, e.g. the orientation of the IMU in respect of the gravity vector. IMU-s in the sense of the present invention provide six degree of freedom data, in particular the mentioned gyroscope and accelerometer data. Both raw and pre-processed data will be referred from here on generically as IMU data. The present invention is not limited to a specific type of IMU data, i.e. it is applicable in combination with IMU-s performing certain data processing steps. Only embodiments, wherein the IMU-s provide gyroscope and acceleration data are discussed in details. The specific features of other types of IMU-s might be applied accordingly.

A key advantage of an IMU based tracking is that the IMU-s do not require a line of sight. I.e. they provide tracking data continuously and reliably without loss of signal periods and can operate without further auxiliary elements arranged on the work vehicle in exposed locations.

The key disadvantage of the IMU-s is their integrative mode of operation, i.e. the velocity is determined by integrating the acceleration, and the position is determined by integrating the velocity. This causes an error accumulation, even in the presence of a zero acceleration bias due to random noise effects. A non-zero acceleration bias would cause a linear error in the velocity and quadratic error in the position. To perform accurate measurements with the IMU-s this drift have to be corrected. Filtering methods to reduce such noise effects and biases, e.g. extended Kalman-filters, are known in the prior art, however a complete suppression of the drift is not possible solely on the basis of IMU data.

Since IMU-s can determine the direction of the gravity vector the drift in respect to this axis could be corrected. However for a complete correction at least one further parameter is required for full observability. The conventional method for achieving this is to provide joint parameters, e.g. a cylinder position, and correct or fix the relative heading and/or the position of the tracked components to a nominal value representing the joint parameter. IMU data, however, comprises orientation and acceleration data with respect to an external reference system, whereas the joint parameters are determined with respect to a component intern reference system. I.e. the coupling between the joint parameter and the respective subsets of the IMU data depends on the orientation of the said joint.

A further disadvantage of these methods is the usage of relative reference systems, which leads to a propagation of the uncertainty through the kinematic chain. I.e. any pose error in a lower order element is transferred to the higher order elements. This causes special concerns under dynamic conditions, wherein more than one component of the work vehicle is moving.

### OBJECT OF THE INVENTION

In view of the above circumstances, one object of the present invention is to provide a computer implemented method for deriving an attitude, wherein the attitude comprises the heading, of an implement of a work vehicle based on the complete six degree of freedom datasets.

A further objective of the present invention is to provide data regarding a drift of an IMU sensors.

A further objective of the present invention is to provide information regarding faulty sensor data and/or a damage of one of the independently tracked components of the work vehicle.

These objectives are at least partly achieved by realizing the characterizing features of the independent claims. Features, which further develop the invention in an alternative or advantageous manner are described in the dependent patent claims.

### SUMMARY OF THE INVENTION

The present invention relates to a computer program product for deriving a heading of an implement of a work vehicle comprising a set of independently tracked components.

The set of independently tracked components comprises the implement, a chassis, and an arm connecting the implement to the chassis. From here on the joint connecting the arm to the chassis will be called as arm joint, while the joint connecting the arm to the implement will be called as implement-joint. The work vehicle might comprise further independently tracked components. Each of the independently tracked components might comprise sub-components which themselves are independently tracked.

Each of the independently tracked components is correspondingly associated to a respective IMU providing six degree of freedom IMU data independently of the further IMU-s. Independent tracking in the sense of the present invention means that the whole six degree of freedom IMU data is processed by the inventive computer program product. I.e. no pre-treatment, in particular discarding or locking a part of the data due to the design of the work vehicle, takes place. An advantage of an independent tracking is that the IMU-s provide data with respect to an external reference frame. I.e. no actualization of the pre-treatment conditions during an attitude change of the independently tracked components is necessary, which reduces uncertainty.

The work vehicle might have an articulated carriage and/or a part of the carriage might be rotatable with respect to the driving direction. In the sense of the present invention the chassis is understood to be a component for which externally referenced heading is provided. Although the present invention is not limited to embodiments, in which the chassis has a fixed orientation with respect to the (forward) direction of travel only these embodiments will be described in detail. The specific features of other types of work vehicles might be applied accordingly.

The present invention is applicable in combination with many different designs of the implement-joint, the arm-joint and the arm. The arm might comprise a plurality of links connected serially or parallel. It is clear for the skilled person that each of the said links are associated correspondingly with a respective IMU.

The computer program product comprises program code which is stored on a machine-readable medium, or is embodied by an electromagnetic wave, comprising a program code, and has computer-executable instructions for performing 1.) accessing a set of constraints comprising a.) internal constraint associated with two of the independently tracked components and representing a fixed spatial relationship between the said components in at least one degree of freedom, and b.) external constraints associated with one of the independently tracked components and representing a fixed spatial relationship between the said component and an external reference frame in at least one degree of freedom; 2.) providing for each of the independently tracked components an IMU component reference frame representing a measured pose of the said component based on the IMU data; 3.) providing a heading of the chassis as an external constraint by accessing externally referenced navigation data; 4.) providing a direction of gravity as an external constraint on the basis of the IMU and/or the navigation data; 5.) providing by a reference frame adjustment algorithm a consistent component reference frame for each of the independently tracked components based on the IMU component reference frames and the set of constraints; and 6.) providing the heading of the implement based on the consistent component reference frames for a controller of the work vehicle. It is self-explanatory for the skilled person that the utilization of numerals and letters does not represent a sequence of performing the steps, but rather a listing of the steps to be carried out in a sensible order. Variations in executing the steps of the various embodiments of the method are within the sense of the present invention.

The claimed invention is not limited to provide the heading of the implement. On the contrary, analogous steps as described in above could be utilized to derive the whole attitude or six degree of freedom pose of the implement or any other component. In particular the derived data can be conveniently transformed into any relative reference frames on the basis of the consistent component reference frames.

Constraints in the sense of the present invention are fixed spatial relationships between two reference frames. Internal constraints are typically representing the design of the work vehicle, in particular the types of joints connecting the independently tracked components. Internal constraints may represent fixed relationship regarding the orientation of the reference frame, fixed distances between the origins of the reference frames or fixed relative (linear) velocities or angular velocities. Table 1 provides some examples of the constraints provided by common joint types.

**Table 1: internal constraints provided by common joint types**

| **Joint Type** | **Orientation constraint** | **Velocity constraint** | **Angular velocity Constraints** |
|---|---|---|---|
| Fixed/Welded | All Aligned | Must be zero | Aligned & equal |
| Prismatic | All Aligned | Vector Known | Aligned & equal |
| Revolute | Rotation Axis Aligned | Must be zero | n.a |
| Cylindrical | Rotation Axis Aligned | Vector Known | n.a |
| U-Joint | n.a | Must be zero | n.a |
| Spherical Joint | n.a | Must be zero | n.a |

External constraints in the sense of the present invention are constraints which provide a fixed orientation to a certain direction in an external reference frame. These include the heading of the chassis and the gravity direction. The heading of the chassis and/or further independently tracked components are provided by externally referenced navigation sensors. Externally referenced navigation sensors might comprise GNSS receivers or different types of tracking sensors, e.g. laser trackers, total stations or optical tracking sensors. Externally referenced navigation sensor might also comprise visual sensor such visual odometry or simultaneous localization and mapping (SLAM) based methods, or electronic compasses. The gravity direction might be provided by the navigation sensors or by one or more IMU-s as the IMU-s can also provide the gravity direction in a drift free manner.

Providing the heading of the chassis as an external constraint allows the tracking of the heading of the components. The externally referenced heading is regarded as drift free in the sense that its drift is at least confined to an interval and does not propagate to infinity, i.e. unlike to the drift of the IMU-s. By deriving the heading from a plurality of high precision instruments, such as a set of GNSS receivers configured to provide real time kinematics (RTK) measurements or by a set of total stations the absolute precision of the heading of the chassis is also sufficiently high. The gravity direction and the heading provides a full observability regarding the orientation of the chassis.

The orientation of the chassis is thus known in an external reference frame. Since the IMU-s deliver six degree of freedom pose data for each of the independently tracked components, the heading of the said components is tracked. The constraints are used to ensure the headings are consistent with the machine construction and with regard to external reference system. This means that unlike to the prior art headings of the independently tracked would not drift independent of each other.

In some embodiments the reference frame adjustment algorithm comprises a variation algorithm, a consistency determination algorithm, an evaluation algorithm, and an optimization algorithm.

The variation algorithm is configured to provide a set of varied component reference frames for each of the independently tracked components by performing a rotation transformation on at least one of the respective IMU component reference frame. With other wording the respective raw IMU data is treated with different weightings in the derivation of a varied component reference frame as compared to the IMU reference frame.

The consistency determination algorithm is configured to provide a local consistency value between a first and a second reference frame based on the associated constraints. The first reference frame is a varied component reference frame, and the second reference frame is the external reference frame; or the first reference frame is a varied component reference frame and the second reference frame is a varied component reference frame different from the first reference frame. The original IMU component reference frames can also take the role of the varied component reference frames. If no constraint exist between the first and second reference frames the consistency determination algorithm might ignore the pair or assign zero consistency.

The evaluation algorithm is configured to provide an overall consistency value based on a set of local consistency values spanning each combination from the set of varied component reference frames and the external reference frame. The overall consistency value might be the sum, a weighted sum, or quadratic sum of the local consistency values. The evaluation algorithm might comprise a threshold criteria for the local consistencies. Such embodiments are advantageous as they aid the identification of a single inconsistent component reference frame. Consistency within a characteristic tolerance of a machine component might be regarded as perfect consistency, in particular the computer program product might consider a wear pattern or a history of the consistent component reference frames in the weighting of the local consistencies.

The optimization algorithm is configured to provide the consistent component reference frames on the basis of the overall consistency value, in particular to derive the consistent component reference frames using sets of varied component reference frames in an iterative regression process wherein the overall consistency value increases in subsequent iteration steps. The increment of the overall consistency value is to be understood in the sense of the iterative regression, i.e. it is a tendency and not a strict requirement for each iterations.

In some embodiments the computer program product comprises a relative motion detection algorithm. The relative motion detection algorithm is configured to detect a relative motion between two of the independently tracked components based on a history of the respective consistent reference frames and actual IMU data. The actual IMU data of the two independently tracked components is indicative of a relative movement. Alternatively or additionally the relative motion detection algorithm provides an assessment on a probability of the detected relative motion on the basis of the internal constraints associated with the respective independently tracked components and/or the provides an assessment on a component health on the basis of the detected relative motion. With other words, unlike to the prior art, wherein such relative motion is determined on the basis of a single IMU data, in the present invention the six degree of freedom IMU data is processed for each independently tracked components. This, among other advantages, allows the observation of the relative motion and provides an assessment whether the observed relative motion is consistent with a rigid body motion, in particular a motion enabled by design of the work vehicle

In some embodiments the consistency determination algorithm comprises an orientation matching algorithm and/or a linear velocity matching algorithm. The orientation matching algorithm comprises a.) deriving a first orientation vector corresponding to the respective fixed spatial relationship in the first reference frame, b.) deriving a second orientation vector corresponding to the respective fixed spatial relationship in the second reference frame, c.) deriving an orientation deviation between the first and the second orientation vectors, and d.) providing the local consistency value between the first and second reference frames based on the orientation deviation. The linear velocity matching algorithm comprises a.) deriving a first velocity vector corresponding to the respective fixed spatial relationship in the first reference frame, b.) deriving a second velocity vector corresponding to the respective fixed spatial relationship in the second reference frame, c.) deriving a linear velocity deviation between the first and the second linear velocity vectors, and d.) providing the local consistency value between the first and second reference frames based on the linear velocity deviation. In some specific embodiments the orientation and the linear velocity matching is based on a Lie group representation of the first and second reference frames. Alternatively or additionally the respective accelerations could also be matched. In some embodiment the deviations are based on a cross product of the respective orientation and linear velocity vectors, while the consistent component reference frames are derived as the component reference frames, wherein the magnitude of the cross product vector is minimal.

In some embodiments the computer program product comprises a relative acceleration bias determination algorithm. The relative acceleration bias determination algorithm comprises program code for executing 1.) providing a time series of the orientation and/or linear velocity deviations between the first and the second reference frames, and 2.) applying a filter, in particular a complementary filter, on the time series of the orientation and/or linear velocity deviations to obtain a filtered relative acceleration bias between the first reference frame and the second reference frame. The computer program product further comprises program code for executing 1.) performing the relative acceleration bias derivation for each of the combinations of the first and second reference frames, and 2.) deriving acceleration biases for each IMU based on a set of obtained filtered relative acceleration biases. Unlike to the prior art embodiments of the inventive computer program product provides the consistent component reference frames in relation to the external reference frame. Due to this the inventive computer program product is suited to determine the drift of the IMU-s in the said external reference system and thereby provide the acceleration biases. Alternatively or additionally gyroscope biases might also be provided by an analogous manner.

In some embodiments the computer program product comprises a component health determination algorithm. The component health determination algorithm comprises a.) selecting one of the IMU-s associated with the independently tracked components, b.) accessing a database comprising stored acceleration biases for the selected IMU, and c.) providing an assessment on a component health based on the derived acceleration biases of the selected IMU and the stored acceleration biases of the selected IMU, in particular wherein at least one of the derived acceleration biases lies outside of a tolerance range defined by the stored acceleration biases. Alternatively or additionally the component health determination might also utilize a time history of the local consistency value between a pair of reference frames.

In some embodiments an attitude of each of the independently tracked components based on the consistent component reference frames is provided for a controller of the work vehicle on the basis of the consistent component reference frames. In some specific embodiments the computer program product comprises the step of providing a six degree pose of each of the independently tracked components in a.) the external reference frame, and/or b.) a chassis centered reference frame, and/or c.) a reference frame centered on a front part of an articulated work vehicle. The above list is non-exclusive and comprises some reference frames having importance with regard to the operator actions. The claimed invention is not limited to these system and further relative reference frames could also be utilized, in particular in a background process controlling the active components of the joints.

In some more specific embodiments the operation of the vehicle is performed in an inverse kinematics. I.e. the operator commands provide a desired new pose and or real space movement of the implement and the controller derives joint control commands on the basis of the operator commands to realize the new pose and/or real space movement.

In some embodiments the internal constraints comprises a set of motionless state constraints associated with two of the independently tracked components performing no relative motion with respect to each other. In some specific embodiments the motionless state constraints are provided by the relative motion detection algorithm. In these embodiments the consistent component reference frames are derived with respect to the motionless state constraints. With other words only, solutions fulfilling the no relative motion between the respective independently tracked components are considered.

In some embodiments the computer program product comprises a tracking inconsistency reporting algorithm. The tracking inconsistency reporting algorithm is configured to provide an error message regarding an inability of the reference frame adjustment algorithm to provide the consistent component reference frames. The error message might be provided when one of the orientation and linear velocity deviations are out of an acceptance range.

The present invention also relates to an implement tracking unit for deriving a heading of an implement of a work vehicle. The work vehicle comprises independently tracked components. The independently tracked components comprise the implement, a chassis, and an arm connecting the implement to the chassis. The implement tracking unit comprises a set of IMU-s providing six degree of freedom IMU data independently of the further IMU-ss. Each of the IMU-s is correspondingly associated with one of the independently tracked components. A navigation sensor configured to provide externally referenced navigation data comprising data regarding a heading of the chassis a computing unit configured to execute the inventive computer program product, and an embodiment of the inventive computer program product.

Navigation sensor in the sense of the presently claimed invention represent a functional definition. E.g. a total station or a laser tracker positioned on a fixed location and a retroreflector arranged on the work vehicle is a navigation sensor for the invention. Moreover the presently claimed invention is applicable with navigation sensors based on visual information, in particular wherein the navigation sensor utilizes visual odometry or SLAM.

The computing unit is similarly a functional definition. I.e. the computing unit might be realized as a single compact entity, as a networked computer with components distributed within the work vehicle. The computing unit might comprise external components not arranged to the work vehicle. Furthermore the computing unit might provide further functionalities.

In some embodiments the navigation sensor comprises at least two GNSS receivers configured to provide RTK data. Such embodiments provide the advantage that the errors of the GNSS signal are corrected, i.e. the absolute error of the heading of the chassis are lower than for a generic GNSS setup.

In some embodiments the implement tracking unit comprises an operator input interface configured to receive operator commands regarding a desired action of the vehicle. The implement tracking unit is configured to activate a motionless state constraint from a stored set of motionless state constraints based on the received operator commands. The operator input interface might comprise at least one joystick, and/or a plurality of buttons and/or a touchscreen. The operator input interface might be configured to receive the operator commands in an inverse kinematic. The operator input interface might comprise input elements, in particular buttons, to lock the movement of at least one joint.

The motionless state constraints are activated especially if the operator command is one of the following a.) a forward or backward movement of the vehicle with no relative arm or implement movement, b.) a pitch movement of the vehicle with no relative arm or implement movement, and c.) an arm movement without vehicle movement and without relative implement movement.

In some embodiments the implement tracking unit is configured a.) to detect a relative motion between two of the independently tracked components based on a history of a local consistency value of the respective IMU component reference frames, and b.) to provide a comparison between a detected relative motion between the two independently tracked components and the operator commands regarding the desired relative motion between the two components.

The present invention also relates to a work vehicle comprising independently tracked components and an implement tracking unit according to the invention. The independently tracked components comprise the implement, a chassis, and an arm connecting the implement to the chassis.

In some embodiments the arm comprises a plurality of independently movable arm segments and/or a spherical joint and/or a cylindrical joint. The independently movable arm segments are movable independently of the chassis, of the implement and of each other, and each of the independently movable arm segments are comprised by the independently tracked components. The present invention is applicable with many different types of work vehicles and not limited to a certain design. In particular the arm might be realized as excavator arm comprising at least a boom and a stick. The arm might comprise a power pitch or push beam structures. In the sense of the present invention some further components, in particular a front part of an articulated vehicle or a side dumping component of an implement might be understood to be a part of the arm.

In some embodiments the work vehicle is one of a crawler, a motor grader, a snow groomer, a front end loader

### BRIEF DESCRIPTION OF THE DRAWINGS

By way of example only, specific embodiments of the invention will be described more fully hereinafter with reference to the accompanying figures, wherein:
Figure 1 shows the schematics of an embodiment of the work vehicle as a crawler with the respective constraints.
Figure 2 shows the schematics of an embodiment of the work vehicle as a motor grader with the respective constraints.
Figure 3 shows the schematics of an embodiment of the work vehicle as a front end loader with the respective constraints.
Figure 4 depicts IMU component reference frames for two independently tracked components connected by a revolute joint.
Figure 5 illustrates a derivation of consisted reference frames for two independently tracked components connected by a revolute joint.
Figure 6 depicts IMU component reference frames for three independently tracked components connected by respective revolute joints.
Figure 7 illustrates the application of an angular velocity constraint.
Figure 8 depicts a schematic flowchart illustrating the functioning of a computer program product according to the invention.

### SPECIFIC EMBODIMENTS OF THE INVENTION

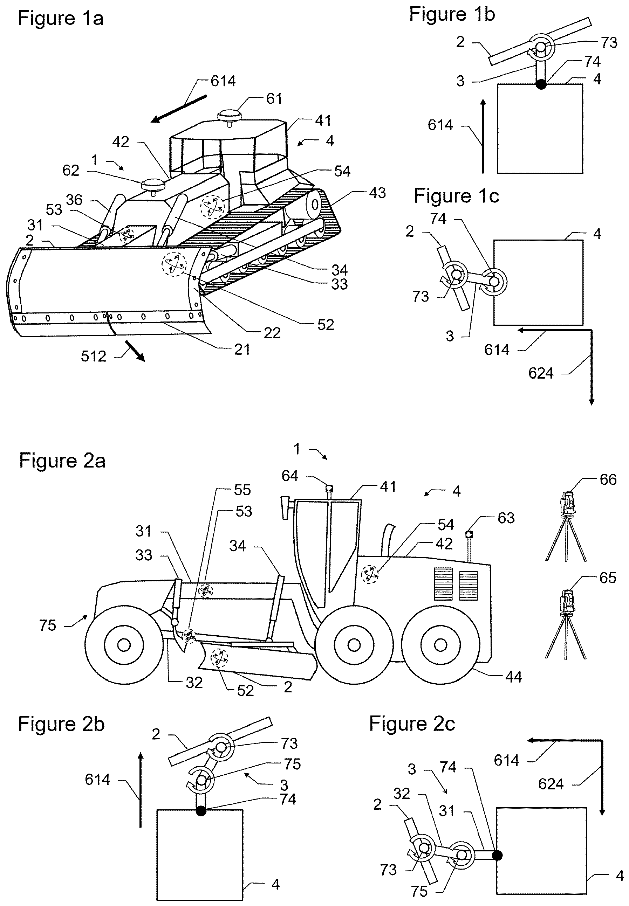

Figure 1a depicts an embodiment of the work vehicle **1** as a crawler. The depicted crawler **1** comprises, as independently tracked components, a blade as an implement **2,** a chassis **4** and a first link **31** of an arm connecting the implement **2** to the chassis **4.** Each of the independently tracked components **2,4,31** is associated with a respective inertial measurement unit (IMU) **52-54.** The depiction of IMU-s **52-54** in this and the further figures is only a conceptual representation, the actual placement and realization may vary depending on the circumstances. The IMU-s **52-54** provide independently tracked six degree of freedom pose of the associated component.

The depicted chassis **4** comprises a driver cab **41,** an engine compartment **42** and a track drive **43** in a fixed orientation arrangement, i.e. the heading **614** of the chassis **4** is a universal parameter. Navigation sensors **61,62,** depicted as two GNSS receivers **61,62,** are placed on the chassis **4** and provide the heading **614** of the chassis **4** independently from the IMU **54** associated with the chassis **4** as an external constraint.

The arm comprises a first link **31** and a set of hydraulic cylinders **33,34,36** as auxiliary components. Alternative embodiments of the arm, e.g. comprising articulated links, a plurality of parallel links or links mounting the cylinders **33,34,36** is also within the sense of the invention.

The depicted implement **2** comprises cutting **21** and side cutting elements **22** as replaceable wear parts, the present invention is however equally applicable with single piece blades, or with other types of implements e.g. buckets. The joints connecting the implement **2** to the first link **31** provide a rotatory degree of freedom for the implement **2.** This means that the heading **512** of the implement **2** is adjustable independently from the heading **614** of the chassis **4.**

Figure 1b provides an overview of the internal and external constraints, respectively degrees of freedom, for the crawler of Figure 1a from the top, while Figure 1c provides a corresponding overview from the side. The heading **614** of the chassis **4** is provided the navigation sensor and similarly to the gravity vector **624** is an external constraint. I.e. the orientation of the chassis **4** with respect to an external reference frame is determined by these directions. The arm-joint **74** connecting arm **3** to the chassis **4** is a revolute joint allowing only tilting movement in one degree of freedom, i.e. the consistent reference frames of the arm **3** and the chassis **4** provide the same heading. The implement-joint **73** connecting the implement **2** to the arm **3** is a cylindrical or a spherical joint providing respectively two or three degrees of freedom tilting of the implement **2** relative to the arm **3.** Furthermore the length of the arm **3** is also a constant, i.e. the consistent reference frames of the independently tracked components **2-4** provide the same linear accelerations.

Figure 2a depicts an embodiment of the work vehicle **1** as a motor grader. The depicted grader **1** comprises, as independently tracked components, a blade as the implement **2,** the chassis **4,** a main frame as a first link of the arm **31** welded to the chassis **4,** and a traction frame as a second link of the arm **32** connecting the implement **2** to the first section. Each of the independently tracked components **2,4,31,32** is associated with a respective IMU **52-55,** which are substantially similar to the IMU-s in Figure 1a.

The depicted chassis **4** comprises a driver cab **41,** an engine compartment **42** and a set of wheels **44** in a fixed orientation arrangement. Navigation sensors **63-66,** depicted as two round prisms **63,64** and the associated total stations **65,66,** provide the heading of the chassis **4** independently from the IMU **54** associated with the chassis **4** as an external constraint.

An intermediate joint **75** connecting a first **31** and second links of the arm **32** is a cylindrical or a spherical joint providing respectively two or three degrees of freedom relative mobility for the second link **32.** The arm further comprises hydraulic cylinders **33,34** as auxiliary components.

Figure 2b provides an overview of the internal and external constraints, respectively degrees of freedom for the grader of Figure 2a from the top, while Figure 2c provides a corresponding overview from the side. The heading **614** of the chassis **4** is provided the navigation sensor and similarly to the gravity vector **624** is an external constraint. I.e. the orientation of the chassis **4** with respect to an external reference frame is determined by these two directions. The arm-joint **74** connecting the first link **31** to the chassis **4** is a welded joint allowing no mobility, i.e. the consistent reference frames of the first link **31** and the chassis **4** provide the same orientations. Contrary to that, the intermediate joint **75** connecting the first **31** and the second links **32** allows two degree of freedom mobility. The implement-joint **73** connecting the implement **2** to the second link **32** is also equivalent to a cylindrical joint allowing a two-degree of freedom tilting of the implement relative to the second link **32.** Furthermore the lengths of the first **31** and second links **32** are also a constant, i.e. the consistent reference frames of the independently tracked components **2-4** provide the same linear accelerations.

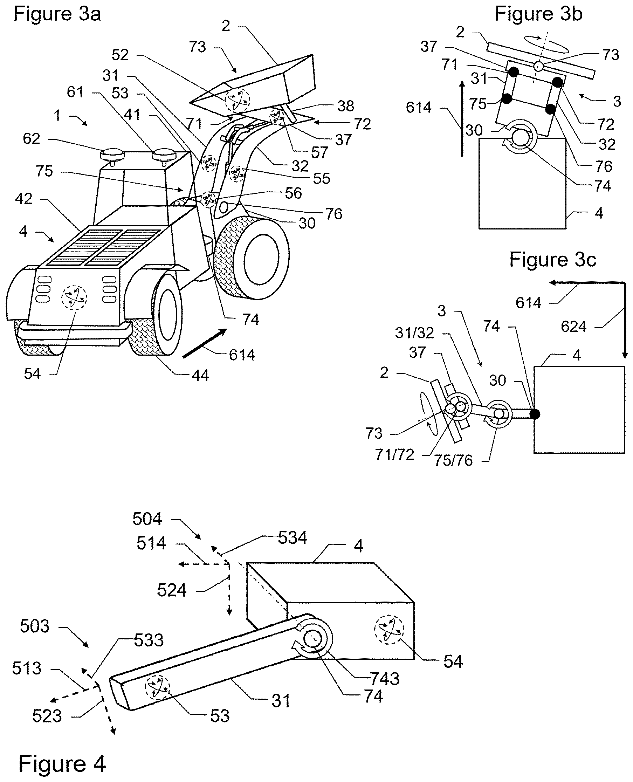

Figure 3a depicts an embodiment of the work vehicle **1** as a front end loader. The depicted front end loader **1** is an articulated vehicle, i.e. the undercarriage comprises a rear portion and a front portion. The chassis **4** in the sense of the present invention comprises the rear portion with a driver cab **41,** an engine compartment **42** and a set of wheels **44** in a fixed orientation arrangement. Navigation sensors **61,62,** depicted as two GNSS receivers **61,62,** to provide a heading **614** of the chassis are placed on the driver cab **41.** A respective IMU **54** is arranged on the chassis.

The arm in the sense of the present invention comprises a front part **30** of the carriage, a first link **31,** a second link **32** and a base element **37** for the side dumping bucket as independently tracked components. Each of these independently tracked components **30-32,37** is associated with a respective IMU **53,55-57.** The side dumping bucket is the implement **2** in the sense of the present invention and a respective IMU **52** is associated with the independently tracked implement **2.** The roll type movement is achieved by the implement-joint **73** and the associated hydraulic cylinder **38.**

The joint connecting the rear part, i.e. the chassis **4,** and the front part **30** is the arm-joint **74** in the sense of the present invention. The joints **75,76** connecting the first **31** and second links **32** to the front parts as well as the joints **71,72** connecting the base element **37** for the side dumping bucket to the first **31** and second links **32** are intermediate joints. It is clear to the skilled person that the here presented definitions serve purely the purpose of readability and transparency. The present invention is not limited to the presented naming convention, but can be applied with any reasonable alternative naming and grouping of the components achieving essentially the same effect.

Figure 3b provides an overview of the internal and external constraints, respectively degrees of freedom for the front end loader of Figure 3a from the top, while Figure 3c provides a corresponding overview from the side. The heading **614** of the chassis **4** is provided the navigation sensor and similarly to the gravity vector **624** is an external constraint. I.e. the orientation of the chassis **4** with respect to an external reference frame is determined by these two directions. The arm-joint **74** connecting the front part **30** to the chassis **4** is a revolute joint allowing only a heading change. Whereas the intermediate joints **71,72,75,76** provide only a vertical tilt respectively between the front part **30** and the first **31** and the second links **32** and the base element **37** and the first **31** and the second links **32.** While not explicitly depicted the first **31** and the second links **32** have a fixed orientation relationship, i.e. no rolling or yawing between the base element **37** and the front part **30** shall be possible. The implement-joint **73** connecting the implement **2** to the base element **37** is also equivalent to a revolute joint allowing a roll-type tilting of the implement **2** relative to the base element **37.** Furthermore the lengths of the first **31** and second links **32** are also a constant.

It is clear to the skilled person that the embodiments depicted in Figure 1-3 are illustrative embodiments depicting certain aspects and features of the claimed invention. Said aspects and features, with straightforward modifications and adjustment can be applied to many different types of work vehicles, implements, arms, navigation sensors etc. In particular the present invention can also be applied with work vehicle having rotating components of the carriage. For such work vehicles similar definitions as illustrated Figure 3 might be applied.

Figure 4 depicts possible IMU component reference frames for two independently tracked components, depicted as the chassis **4** and the first link **31** of the arm, connected by a revolute joint **74** providing a rotation around the joint axis **743.** The present invention is not limited to independently tracked components **4,31** connected by revolute joints **74.** A revolute joint was selected for transparency reasons and the specific aspects of different joint types with additional or alternative degrees of freedom might be applied accordingly. The first link **31** and the chassis **4** are each associated with the respective IMU-s **53,54.** Said IMU-s **53,54** providing data to generate the respective IMU component reference frames **503,504.** For transparency reasons only the orientation of the IMU component reference frame of the first link **503** represented by three vectors **513,523,533** and the orientation of the IMU reference frame of the chassis **504** represented by three vectors **514,524,534** are depicted. Due to the nature of the revolute joint **74** the vectors **533,534** aligned to the joint axis **743** should point towards the same direction if the IMU component reference frames of the first link **503** and the chassis **504** are consistent.

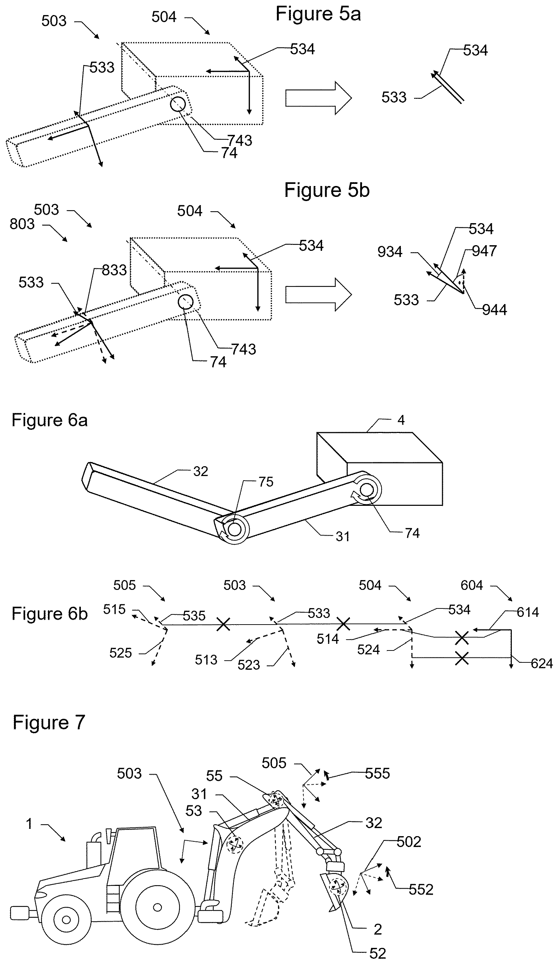

Figure 5 depicts the two IMU component reference frames **503,504** from Figure 4, i.e. associated with an internal constraint that the respective orientations **533,534** corresponding to the rotation axis **743** of the revolute joint **74** are parallel to each other when the two IMU component reference frames **503,504** are consistent to the constraints. Figure 5a depicts a situation when the two IMU component reference frames **503,504** are consistent, i.e. the corresponding vectors **533,534** are parallel to each other. In Figure 5b a different situation is shown. Because of tracking errors, two IMU component reference frames **503,504** are not consistent and there is a misalignment rotation **934** between the two. Frame **803** and the respective and vector **833** is a virtual frame that represents the true relationship free of the alignment error **934,** i.e. a respective locally consistent reference frame. The alignment error **934** means that a finite angle **934** exist between the corresponding vectors **533,534,** or alternatively the cross product **944** of the said vectors **533,534** has a finite magnitude. Using the cross product **944** is advantageous as it is always perpendicular **947** to the corresponding vectors **533,534** and its magnitude comprises information regarding the relative inconsistency between the IMU component reference frames **503,504.** Since the situation depicted in Figure 5 is symmetrical, the cross product **944** is only a metric of the relative inconsistency and the source of the inconsistency might be a drift of any one or both of the IMU component reference frames **503,504.**

Figure 6a depicts a situation with three independently tracked components, the chassis **4,** the first link **31** and the second link **32,** connected by the respective revolute joints **74,75.** Figure 6b depicts respective IMU components reference frames **503-505** represented by their orientation vectors **513,523,533; 514,524,534** and **515,525,535** as well as the external reference frame **604** represented by the heading of the chassis **614** and the direction of the gravity vector **624.** Due to the design of the revolute joints the constraints exist between the respective pairs (**503,505** and **503,504**) of IMU component reference frames. I.e. the corresponding vectors (**533,535** and **533,534**) are parallel to each other in a consistent representation. Furthermore the IMU component reference frame of the chassis **504** is connected to the external reference frame **604** by respective external constraints. Local consistency between any two of the IMU component reference frames **503-505** and/or one IMU component reference frame **503-505** and the external reference frame **604** can be determined e.g. using the cross product of the respective vectors as depicted in Figure 5. While the consistent component reference frames might be derived by providing optimizing an overall consistency on the basis of the local consistencies. In some embodiments consistency with an external reference frame **604** has a higher weight than consistency between two component reference frames, in particular complete consistency is expected.

Figure 7 depicts the application of the observed actuation state of the work vehicle **1** in order to determine which of the independently tracked components are moving relative to other independently components. This enables the algorithm to apply additional constraints as appropriate. The depicted work vehicle **1** is a tractor equipped with a backhoe arm. The backhoe arm comprises a boom as the first link **31** and a stick as the second link **32.** The implement **2,** the first **31** and the second links **32** each has a respective IMU **52,53,55** associated with them. The IMU-s **52,53,55** define the IMU component reference frames **502,503,505.** The backhoe arm performs a rigid rotation of the stick **32** and the implement **2** while the boom **31** rests still.

Regarding the boom **31** the motionless state constraints are applicable, such constraints might be provided by analyzing the operator commands, or on the basis of the data provided by the respective IMU **53.** In particular the history of the consistent reference frames.

The IMU **52** associated with the implement **2** and the IMU **55** associated with the stick **32** detect the respective angular velocities **552,555.** In this case, we know that the global angular velocities are the same. If the magnitude of the measured angular velocity **552,555** is sufficiently large compared to the sensor noise, then there will be a high enough signal to noise ratio to use the measured direction of the angular velocity **552,555** as another constraint. If the orientations of the implement **2** and the stick **32** are consistent, the motion **552,555** measured by the two IMUs **52,55** will be consistent. However, if there is error between the two orientations, then there will be a misalignment between the global directions of the measured motion similarly to the case depicted in Figure 5. For reasons of transparency a rather simple action is depicted in Figure 7, however the present invention is not limited to such simple cases and the features of more complex actions might be applied respectively.

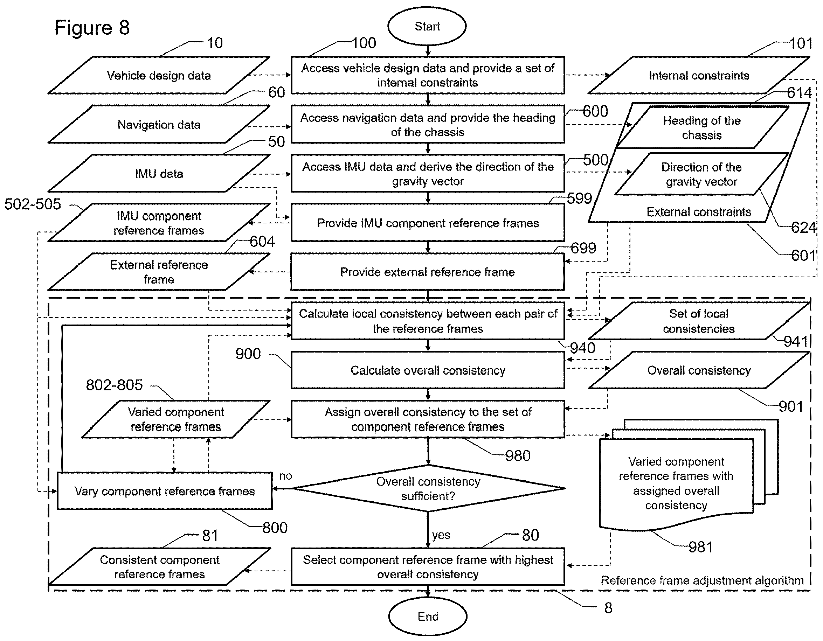

Figure 8 depicts a flowchart regarding the functioning of an embodiment of a computer program product according to the invention. Flow/command lines are shown with bold while data lines are shown with dashed lines. Some flowlines and/or data lines might not be shown in the schematic flowchart for transparency reasons. In the depicted embodiment the computer program product accesses a vehicle design data **10** and provides **100** a set of internal constraints **101** on the basis of the vehicle design data **10.** The design data **10** represents the actual state of the work vehicle, in particular the actually mounted arm and/or implement.

The depicted computer program also accesses navigation data **60** and derives **600** the heading **614** of the chassis from the navigation data **60.** The navigation data **60,** and consequently the heading **614** of the chassis is referenced to an external reference frame.

The computer program also accesses the IMU data **50** and derive **500** the direction of the gravity vector **624.** The heading **614** of the chassis and the direction of the gravity vector **624** are comprised by the external constraints **601.** The internal **101** and external constraints **601** together form the set of constraints. Alternatively or additionally the direction of the gravity vector **624** might also be derived from the navigation data **60.**

The IMU component reference frames **502-505** are provided **599** based on the IMU data **50.** Alternative embodiments, wherein the IMU-s themselves provide IMU component reference frames **502-505** are within the sense of the present invention. The computer program product according to the invention does not have to run on a single specific computer. On the contrary, the present invention encompasses embodiments optimized for distributed computation, or wherein one or more data pre-treatment step is performed externally.

The external reference frame **604** is provided **699** on the basis of the external constraints **601.** Alternatively or additionally the external reference frame **604** might be directly provided by the navigation sensor providing the navigation data **60.**

The core of the depicted computer program is the reference frame adjustment algorithm **8** marked by a dashed border. This boundary is for illustrative purposes only and is in no way intended to imply that said algorithm would be realized in a compact program code segment. The computer program product according to the invention is not bound to any specific hardware and software environment and the skilled person inter alia might provide different solutions depending on the environment.

The depicted reference frame adjustment algorithm **8** is realized as a loop. First a set of local consistencies **941** between each pairs of actual reference frames (e.g. the external reference frame **604** and the IMU component reference frames **502-505** in an initial step or the external reference frame **604** and varied component reference frames **802-805** in a later stage) are calculated **940.** This calculation **604** refers to the internal **101** and external constraints **601** between the pair of reference frames **502-505,604,802-805,** in particular if no constraint between the said pair exists the local consistency might be selected to be zero. The local consistency might be calculated in the manner shown in Figure 5.

On the basis of the set of local consistencies **941** the overall consistency **901** is calculated **900.** Local consistency **941** with the external reference frame **604** might have higher weights in calculating **900** the overall consistency **901,** in particular a deviation above a threshold might lead to a zero overall consistency **901.**

The calculated overall consistency **901** is assigned **980** to the component reference frames **502-505,802-805** to form a database **981.** In the depicted embodiment a test criterion regarding a sufficiency of the overall consistency **901** is applied. If the overall consistency is insufficient a new set of varied component reference frames **802-805** is provided **800.** If the overall consistency is sufficient the actual set of component reference frames **502-505,802-805** is selected **80** as a consistent set of component reference frames **81.** Alternative test criteria might also be applied, e.g. that a sufficient number of varied component reference frames or a sufficient phase volume has been analyzed. With alternative wording the flowchart depicts an iterative regression algorithm, wherein the varied component reference frames **802-805** are a result of applying a correction to the IMU component reference frames **502-505** and the selection **80** is determining a combination of the consistent reference frames **81** that results in a high overall consistency **901** across the constraints **601.**

Furthermore the depicted flow chart is based on the assumption that a set of consistent component reference frames **81** with respect to the internal **101** and external constraints **601** is derivable from the IMU data **50.** Some embodiments of the computer program products further comprise further verification step regarding the credibility of the consistent component reference frames **81.** Said embodiments might comprise error management elements to provide information regarding an unsuccessful derivation of the consistent component reference frames **81** or wherein the credibility of the derived consistent component reference frames **81** is low.

Although the invention is illustrated above, partly with reference to some specific embodiments, it must be understood that numerous modifications and combinations of different features of the embodiments can be made. All of these modifications lie within the scope of the appended claims.

## Claims

1. A computer program product for deriving a heading (512) of an implement (2) of a work vehicle (1) comprising a set of independently tracked components, wherein
- the set of independently tracked components comprises the implement (2), a chassis (4), and an arm (3) connecting the implement (2) to the chassis (4),
- each of the independently tracked components is correspondingly associated to a respective inertial measurement unit (52-57) providing six degree of freedom IMU data (50) independently of the further inertial measurement units (52-57),
- the computer program product comprises program code which is stored on a machine-readable medium, or is embodied by an electromagnetic wave, comprising a program code, and has computer-executable instructions for performing
∘ accessing a set of constraints comprising
▪ internal constraint (101) associated with two of the independently tracked components and representing a fixed spatial relationship between the said components in at least one degree of freedom, and
▪ external constraints (601) associated with one of the independently tracked components and representing a fixed spatial relationship between the said component and an external reference frame (604) in at least one degree of freedom,
∘ providing (599) for each of the independently tracked components an IMU component reference frame (502-505) representing a measured pose of the said component based on the IMU data (50),
∘ providing a heading (614) of the chassis (4) as an external constraint (601) by accessing (600) externally referenced navigation data (60),
∘ providing a direction of gravity (624) as an external constraint (601) on the basis of the IMU data (50) and/or the navigation data (60),
∘ providing (80) by a reference frame adjustment algorithm (8) a consistent component reference frame (81) for each of the independently tracked components based on the IMU component reference frames (502-505) and the set of constraints,
∘ providing the heading (512) of the implement (2) based on the consistent component reference frames (81) for a controller of the work vehicle (1).

2. The computer program product according to claim 1, wherein the reference frame adjustment algorithm (8) comprises a variation algorithm, a consistency determination algorithm, an evaluation algorithm, and an optimization algorithm wherein
- the variation algorithm is configured to provide (800) a set of varied component reference frames (802-805) for each of the independently tracked components by performing a rotation transformation on at least one of the respective IMU component reference frame (502-505),
- the consistency determination algorithm is configured to provide (940) a local consistency value (941) between a first and a second reference frame based on the associated constraints, wherein
∘ the first reference frame is a varied component reference frame (802-805), and the second reference frame is the external reference frame (604), or
∘ the first reference frame is a varied component reference frame (802-805) and the second reference frame is a varied component reference frame (802-805) different from the first reference frame,
- the evaluation algorithm is configured to provide (900) an overall consistency value (901) based on a set of local consistency values (941) spanning each combination from the set of varied component reference frames (802-805) and the external reference frame (604),
- the optimization algorithm is configured to provide (80) the consistent component reference frames (81) on the basis of the overall consistency value (901), in particular to derive (80) the consistent component reference frames (80) using sets of varied component reference frames (802-805) in an iterative regression process, wherein the overall consistency value (901) increases in subsequent iteration steps.

3. The computer program product according to claim 2 comprising a relative motion detection algorithm, wherein the relative motion detection algorithm is configured to detect a relative motion between two of the independently tracked components based on a history of the respective consistent component reference frames (81) and actual IMU data (50), wherein the actual IMU data (50) of the two independently tracked components is indicative of a relative movement,
in particular wherein the relative motion detection algorithm provides an assessment on a probability of the detected relative motion on the basis of the internal constraints (101) associated with the respective independently tracked components and/or the provides an assessment on a component health on the basis of the detected relative motion.

4. The computer program product according to any one of claims 2 or 3, wherein the consistency determination algorithm comprises an orientation matching algorithm and/or a linear velocity matching algorithm,
- the orientation matching algorithm comprising
∘ deriving a first orientation vector (533) corresponding to the respective fixed spatial relationship (743) in the first reference frame (503),
∘ deriving a second orientation vector (534) corresponding to the respective fixed spatial relationship (743) in the second reference frame (504),
∘ deriving an orientation deviation (934) between the first (533) and the second orientation vectors (534),
∘ providing the local consistency value (941) between the first and second reference frames based on the orientation deviation (934), and
- the linear velocity matching algorithm comprising
∘ deriving a first velocity vector corresponding to the respective fixed spatial relationship in the first reference frame,
∘ deriving a second velocity vector corresponding to the respective fixed spatial relationship in the second reference frame,
∘ deriving a linear velocity deviation between the first and the second linear velocity vectors,
∘ providing the local consistency value (941) between the first and second reference frames based on the linear velocity deviation
in particular wherein the orientation and the linear velocity matching is based on a Lie group representation of the first and second reference frames.

5. The computer program product according to claim 4 comprising a relative acceleration bias determination algorithm, wherein
- the relative acceleration bias determination algorithm comprising
∘ providing a time series of the orientation (934) and/or linear velocity deviations between the first and the second reference frames,
∘ applying a filter, in particular a complementary-filter, on the time series of the orientation (934) and/or linear velocity deviations to obtain a filtered relative acceleration bias between the first reference frame and the second reference frame,
- the computer program product further comprising
∘ performing the relative acceleration bias derivation for each of the combinations of the first and second reference frames,
∘ deriving acceleration biases for each inertial measurement unit (52-57) based on a set of obtained filtered relative acceleration biases.

6. The computer program product according to claim 5 comprising a component health determination algorithm, wherein the component health determination algorithm comprises
- selecting one of the inertial measurement units (52-57) associated with the independently tracked components,
- accessing a database comprising stored acceleration biases for the selected inertial measurement unit (52-57), and
- providing an assessment on a component health based on the derived acceleration biases of the selected inertial measurement unit (52-57) and the stored acceleration biases of the selected inertial measurement unit (52-57), in particular wherein at least one of the derived acceleration biases lies outside of a tolerance range defined by the stored acceleration biases.

7. The computer program product according to any one of the preceding claims, wherein the computer program product further comprises a step of providing an attitude of each of the independently tracked components based on the consistent component reference frames (81) for a controller of the work vehicle (1),
in particular wherein the computer program product comprises the step of providing a six degree pose of each of the independently tracked components in
- the external reference frame (604), and/or
- a chassis centered reference frame, and/or
- a reference frame centered on a front part of an articulated work vehicle.

8. The computer program product according to any one of the preceding claims, wherein the internal constraints (101) comprises a set of motionless state constraints associated with two of the independently tracked components performing no relative motion with respect to each other, in particular wherein the motionless state constraints are provided by the relative motion detection algorithm according to claim 3.

9. The computer program product according to any one of the preceding claims comprising a tracking inconsistency reporting algorithm configured to provide an error message regarding an inability of the reference frame adjustment algorithm (8) to provide (80) the consistent component reference frames (81), in particular wherein one of the orientation (934) and linear velocity deviations of claim 4 are out of an acceptance range.

10. A implement tracking unit for deriving a heading (512) of an implement (2) of a work vehicle (1) comprising independently tracked components, wherein
- independently tracked components comprise the implement (2), a chassis (4), and an arm (3) connecting the implement (2) to the chassis (4),
- the implement tracking unit comprises
∘ a set of inertial measurement units (52-57) providing six degree of freedom IMU data (50) independently of the further inertial measurement units (52-57), wherein each of the inertial measurement units (52-57) is correspondingly associated with one of the independently tracked components,
∘ a navigation sensor (61-66) configured to provide externally referenced navigation data (60) comprising data regarding a heading (614) of the chassis (4),
∘ a computing unit configured to execute the computer program product according to any one of the claims 1 to 9, and
∘ the computer program product according to any one of the claims 1 to 9.

11. The implement tracking unit according to claim 10, wherein the navigation sensor (61-66) comprises at least two GNSS (61,62) receivers configured to provide real-time kinematics data.

12. The implement tracking unit according to any one of the claims 10 to 11, wherein the implement tracking unit
- comprises an operator input interface configured to receive operator commands regarding a desired action of the vehicle, and
- is configured to activate a motionless state constraint from a stored set of motionless state constraints based on the received operator commands,
in particular wherein
- the operator command is a forward or backward movement of the vehicle with no relative arm or implement movement,
- the operator command is a pitch movement of the vehicle with no relative arm or implement movement,
- the operator command is an arm movement without vehicle movement and without relative implement movement.

13. The implement tracking unit according to claim 12 being configured
- to detect a relative motion between two of the independently tracked components based on a history of a local consistency value (941) of the respective IMU component reference frames (502-505), and
- to provide a comparison between a detected relative motion between the two independently tracked components and the operator commands regarding the desired relative motion between the two independently tracked components.

14. Work vehicle (1) comprising independently tracked components and an implement tracking unit according to any one of claims 10 to 13, wherein the independently tracked components comprise the implement (2), a chassis (4), and an arm (3) connecting the implement (2) to the chassis (4).

15. Work vehicle (1) according to claim 14, wherein
- the arm (3) comprises a plurality of independently movable arm segments (30-32,37) and/or a spherical and/or a cylindrical joint,
in particular wherein
- the independently movable arm segments (30-32,37) are movable independently of the chassis (4), of the implement (2) and of each other,
- each of the independently movable arm segments (30-32,37) are comprised by the independently tracked components, and
in particular wherein the work vehicle (1) is one of a crawler, a motor grader, a snow groomer, a front end loader.
